# FASCICULE DE BREVET EUROPEEN

(11) **EP 1 845 693 B1**
(45) Date de publication et mention de la délivrance du brevet: **16.09.2015**
(21) Numéro de dépôt: 06300363.6
(22) Date de dépôt: 13.04.2006
(51) Int. Cl.: H04L 29/06, H04L 29/08, H04L 12/54, H04L 12/911, H04L 12/913, H04L 12/927

(54) **Dispositif de contrôle de l'établissement de sessions**
Vorrichtung zur Steuerung des Sitzungsaufbaus
Device for controlling session set-up

(43) Date de publication de la demande: 17.10.2007
(73) Titulaire: ALCATEL LUCENT, 92100 Boulogne-Billancourt (FR)
(72) Inventeur: Pichot, Antoine, 02330, BAULNE EN BRIE (FR)
(74) Mandataire: Sciaux, Edmond

(56) Documents cités:
- US-A1- 2003 035 401
- US-B1- 6 366 577
- INTERDIGITAL COMMUNICATION: "Admission Control Based on Support of RSVP based QoS" 3GPP TSG-SA2 IMS KEY ISSUE MEETING, 29 août 2001 (2001-08-29), XP002379624
- CAMARILLO G ET AL: "Integration of Resource Management and Session Initiation Protocol (SIP); rfc3312.txt" IETF STANDARD, INTERNET ENGINEERING TASK FORCE, IETF, CH, octobre 2002 (2002-10), XP015009089 ISSN: 0000-0003

## Description

L'invention concerne les réseaux de communication, et plus précisément l'établissement de sessions entre des terminaux de communication au sein de tels réseaux.

Lorsque des applications implantées dans des terminaux de communication souhaitent établir entre elles une session pour s'échanger des données via un réseau de communication, elles doivent initier une procédure d'établissement (ou de création) de session. Cet établissement de session se faisant sans la connaissance de la capacité du réseau à supporter cette session, le réseau de communication peut ne pas être en mesure de les supporter. Par conséquent, il peut survenir que des applications ne puissent pas échanger de données dans le cadre d'une session alors même que cette dernière a été établie via un réseau de communication.

Parmi les réseaux (de communication), on peut distinguer ceux qui ont une capacité de réservation de ressources et ceux qui ne possèdent pas cette capacité. Les réseaux reposant uniquement sur le protocole IP ne possèdent pas cette capacité. Parmi les réseaux qui disposent de la capacité précitée, on peut notamment citer ceux qui comportent un plan de contrôle distribué MPLS ou GMPLS.

On entend ici par « réseau de communication à plan de contrôle MPLS (pour Multi Protocol Label Switching) », un réseau commutant des étiquettes (ou « labels ») affectés, par exemple, à des paquets IP ou des trames ATM ou Frame Relay, et possédant un plan de contrôle MPLS. Par ailleurs, on entend ici par « réseau à plan de contrôle GMPLS (pour Generalized Multi Protocol Label Switching), un réseau commutant des étiquettes (ou « labels ») généralisées associées à des circuits, comme par exemple les réseaux TDM (de type SONET/SDH, PDF, G.709), ou bien associées à des fibres optiques, ou encore associées à des ports d'entrée/sortie, et possédant un plan de contrôle GMPLS. Par la suite, on désigne ces exemples de réseau à plan de contrôle distribué par l'expression réseau (G)MPLS.

Dans de tels réseaux à commutation d'étiquettes, les routes établies entre noeuds de type routeur sont appelés LSPs (pour « Label Switched Paths » - chemins à commutation d'étiquettes) ou TE-LSPs (« Traffic Engineering-LSPs » - LSPs à ingénierie de trafic).

Dans ces réseaux de communication, les mécanismes de réservation de ressources permettent de garantir pour une session une qualité de service (ou QoS) entre deux noeuds du réseau. Mais, ils ne permettent pas de garantir une qualité de service à des applications d'utilisateurs, lorsqu'elles et tant qu'elles en ont effectivement besoin. Cela résulte du fait que les applications d'utilisateurs sont implantées dans des terminaux qui ne peuvent pas accéder à ces mécanismes, qui reposent sur des protocoles de réservation de ressources à extension de trafic d'ingénierie, comme par exemple RSVP-TE (« Resource reSerVation Protocol - Traffic Engineering »), et des protocoles de routage à extension de trafic d'ingénierie, comme par exemple OSPF-TE (« Open Shortest Path First Protocol - Traffic Engineering »).

Les opérateurs de réseau ayant choisi de ne pas laisser ces mécanismes accessibles aux utilisateurs de leur réseau les protocoles de réservation de ressources et de routage doivent donc être intégrés dans les terminaux d'utilisateurs. Cela nécessite que les terminaux connaissent l'ensemble de ces protocoles. Or, si plusieurs protocoles de réservation de ressources sont utilisés par différents terminaux d'utilisateurs, la situation devient ingérable. En outre, ce type de communication souffre des défauts et du caractère incomplet des protocoles de réservation de ressources et de routage. Ils constituent en effet des protocoles de type binaire et non de type textuel, et n'offrent pas de mécanisme puissant d'authentification, autorisation et comptabilité (ou AAA pour « Authentication, Authorization and Accounting »), notamment.

Aujourd'hui, la solution retenue dans les réseaux de type dit NGN, consiste à exploiter un protocole de création de session, pour que les terminaux signalent au réseau leur besoin de créer une session. Les communications de la couche session se font entre une application d'utilisateur et un ou plusieurs éléments de réseau chargés de gérer l'établissement de sessions de terminaux d'utilisateurs, comme par exemple un serveur proxy de type SIP (pour « Session Initiation Protocol »). Dans ce cas, le terminal d'utilisateur qui veut établir une session transmet à un serveur proxy SIP un message de demande d'établissement de session, et le serveur proxy SIP agit au nom du terminal d'utilisateur en provoquant à distance la génération de messages de réservation de ressources dans des équipements de réseau, comme par exemple des routeurs.

Ce type de communication utilise des protocoles assez flexibles et offre de nombreux mécanismes de sécurité. En outre, il utilise des protocoles de type textuel qui servent déjà à gérer la qualité de service en mode bout-en-bout (ou « end-to-end »). Cependant, ce type de communication ne permet pas aux terminaux d'utilisateurs de connaître les caractéristiques des sessions que le réseau peut supporter : le terminal d'utilisateur sait en effet seulement si une session peut être établie ou non.

D'autres solutions n'exploitant pas de protocole de création de session ont été proposées. Ainsi, les applications d'utilisateur peuvent communiquer avec le réseau, tant pour réserver des ressources que pour obtenir des informations sur la capacité du réseau en passant par le système de gestion de réseau (ou NMS). Ce type de communication est notamment utilisé dans certains réseaux de recherche.

L'inconvénient principal de ce type de communication réside dans le fait qu'il nécessite l'utilisation d'interfaces non standard, c'est-à-dire propriétaire. En outre, l'utilisation d'une interface via le système de gestion de réseau (NMS) limite le déploiement de ce type de communication. En effet, les opérateurs ne désirent pas, en général, offrir une interface vers leurs systèmes de gestion, même si cette interface est bien sécurisée, pour des questions de sécurité.

Le document US 2003/035401 A1 reflète l'état de la technique.

L'invention a donc pour but de remédier à tout ou partie des inconvénients précités et est définie par les revendications indépendantes.

Elle propose à cet effet un dispositif dédié au contrôle de l'établissement de sessions de communication de données (par exemple de voix ou de vidéo) entre des terminaux de communication, et comprenant des moyens de traitement chargés, en cas de réception d'une demande d'établissement d'une session entre un terminal demandeur et au moins un terminal de correspondant, de localiser chaque terminal de correspondant de manière à permettre l'établissement de cette session.

Ce dispositif de contrôle se caractérise par le fait :
- qu'il comprend des moyens de recherche chargés, lorsque les moyens de traitement ont reçu une demande d'établissement d'une session entre un terminal demandeur et au moins un terminal de correspondant et qu'ils ont localisé ce(s) dernier(s), de déterminer des informations représentatives de caractéristiques de session que peut supporter chaque communication entre le terminal demandeur et un terminal de correspondant, et
- que ses moyens de traitement sont chargés d'intégrer dans au moins un message de contrôle de session destiné au terminal demandeur et/ou à l'un au moins des terminaux de correspondant les informations de session déterminées par les moyens de recherche, afin que l'un au moins de ces terminaux puisse décider d'établir effectivement la session compte tenu des informations reçues.

Le dispositif selon l'invention peut comporter d'autres caractéristiques qui peuvent être prises séparément ou en combinaison, et notamment :
- ses moyens de traitement peuvent être chargés d'intégrer les informations de session dans un message de contrôle de session destiné au terminal demandeur, afin qu'il puisse décider d'établir effectivement la session compte tenu des informations reçues ;
   ➢ ses moyens de traitement peuvent être chargés, en cas de réception d'une demande d'établissement d'une session entre un terminal demandeur et au moins un terminal de correspondant, d'ordonner le transfert de la demande vers chaque terminal de correspondant localisé, et, en cas de réception de messages de contrôle de session signalant un accord d'établissement provenant de chaque terminal de correspondant, d'intégrer dans l'un au moins de ces messages de contrôle de session reçus les informations de session avant d'ordonner leur transfert vers le terminal demandeur ;
- dans une première variante, ses moyens de traitement peuvent être chargés d'intégrer les informations de session dans des messages de contrôle de session destinés à chaque terminal de correspondant, afin que l'un au moins d'entre eux puisse décider d'établir effectivement la session compte tenu des informations reçues ;
   ➢ ses moyens de traitement peuvent être chargés, en cas de réception d'une demande d'établissement d'une session entre un terminal demandeur et au moins un terminal de correspondant, d'intégrer dans ce message reçu les informations de session avant d'ordonner son transfert vers chaque terminal de correspondant localisé, et, en cas de réception de messages de contrôle de session signalant un accord d'établissement provenant de chaque terminal de correspondant, d'ordonner le transfert de ces messages de contrôle de session reçus vers le terminal demandeur ;
- dans une seconde variante, ses moyens de traitement peuvent être chargés d'intégrer les informations de session dans des messages de contrôle de session destinés respectivement au terminal demandeur et à chaque terminal de correspondant, afin que l'un au moins de ces terminaux puisse décider d'établir effectivement la session compte tenu des informations reçues ;
   ➢ ses moyens de traitement peuvent être chargés, en cas de réception d'une demande d'établissement d'une session entre un terminal demandeur et au moins un terminal de correspondant, d'intégrer dans ce message reçu les informations de session avant d'ordonner son transfert vers chaque terminal de correspondant localisé, et, en cas de réception de messages de contrôle de session signalant un accord d'établissement et comprenant les informations de session, en provenance de chaque terminal de correspondant, d'ordonner le transfert de ces messages de contrôle de session reçus vers le terminal demandeur;
- ses moyens de recherche peuvent être chargés de déterminer les informations de session à partir de données déterminées auprès d'éléments du réseau de communication (comme par exemple des routeurs) disposant d'une base de données, par exemple d'ingénierie de trafic, au moyen de messages conformes à un protocole de routage à extension d'ingénierie de trafic choisi ;
   ➢ le protocole de routage à extension d'ingénierie de trafic peut par exemple être le protocole OSPF-TE ;
- dans une première variante, correspondant à une situation dans laquelle il est intégré dans un élément de réseau disposant d'une base de données d'ingénierie de trafic, ses moyens de recherche peuvent être chargés de déterminer les informations de session dans la base de données d'ingénierie de trafic de cet élément de réseau ;
- dans une seconde variante, ses moyens de recherche peuvent être chargés de déterminer les informations de session auprès d'un système de gestion de réseau (NMS) du réseau de communication, au moyen de messages conformes à un protocole choisi, comme par exemple SNMP ;
- les informations de session peuvent être choisies parmi des données d'ingénierie de trafic, des informations issues de données d'ingénierie de trafic, des informations relatives à la qualité de service, et des informations issues des données de qualité de service ;
- les messages de contrôle de session peuvent par exemple être conformes au protocole de session SIP et/ou SDP.

L'invention propose également un serveur proxy (éventuellement SIP) équipé d'un dispositif de contrôle du type de celui présenté ci-avant. Un tel serveur proxy peut par exemple faire partie d'un routeur.

L'invention est particulièrement bien adaptée, bien que de façon non exclusive, aux réseaux de communication mettant en oeuvre des mécanismes de réservation de ressources, comme par exemple ceux comportant un plan de contrôle distribué MPLS ou GMPLS.

D'autres caractéristiques et avantages de l'invention apparaîtront à l'examen de la description détaillée ci-après, et des dessins annexés, sur lesquels :
- la figure 1 illustre de façon très schématique et fonctionnelle une partie d'un réseau de communication couplé par des routeurs à des terminaux de communication et comprenant un premier exemple de réalisation d'un dispositif de contrôle selon l'invention, implanté dans un serveur proxy connecté à l'un desdits routeurs,
- la figure 2 illustre de façon très schématique et fonctionnelle une partie d'un réseau de communication couplé par des routeurs à des terminaux de communication et comprenant un second exemple de réalisation d'un dispositif de contrôle selon l'invention, implanté dans un serveur proxy faisant partie de l'un desdits routeurs,
- la figure 3 illustre de façon très schématique un premier exemple de succession d'étapes de traitement permettant à un terminal demandeur d'établir une session dans un réseau capable de réserver des ressources,
- la figure 4 illustre de façon très schématique un deuxième exemple de succession d'étapes de traitement permettant à un terminal demandeur de d'établir une session dans un réseau capable de réserver des ressources, et
- la figure 5 illustre de façon très schématique un troisième exemple de succession d'étapes de traitement permettant à un terminal demandeur de d'établir une session dans un réseau capable de réserver des ressources.

Les dessins annexés pourront non seulement servir à compléter l'invention, mais aussi contribuer à sa définition, le cas échéant.

L'invention a pour objet de permettre à des terminaux de communication, qui souhaitent établir des sessions via un réseau de communication, d'obtenir de ce réseau de communication des informations représentatives au moins en partie des caractéristiques de session qu'il est en mesure de permettre à un instant donné, afin de pouvoir décider de poursuivre l'établissement de ces sessions (et éventuellement de procéder à la réservation des ressources correspondantes).

Dans ce qui suit, on considère à titre d'exemple non limitatif que le réseau de communication est un réseau de type IP/(G)MPLS. Mais l'invention n'est pas limitée à ce type de réseau de communication mettant en oeuvre des mécanismes de réservation de ressources. Elle concerne en effet tous les réseaux de communication, et notamment les réseaux IP sans plan de contrôle MPLS ou GMPLS.

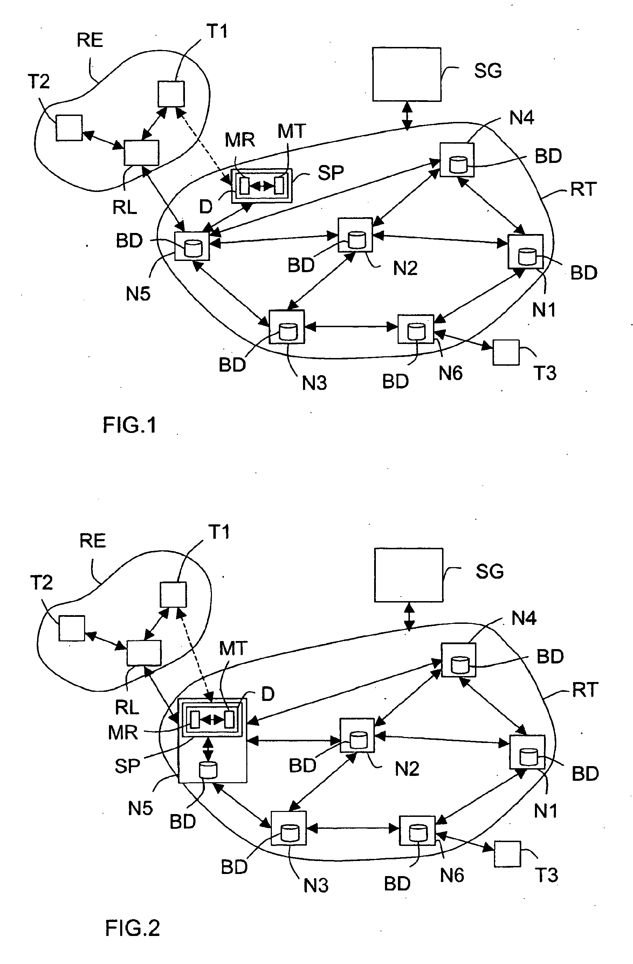

Comme cela est illustré sur la figure 1, un réseau de communication IP/GMPLS RT comporte très schématiquement des noeuds Ni connectés les uns autres par des liens physiques, comme par exemple des fibres optiques, et généralement couplés à un équipement de gestion EG, comme par exemple un serveur, faisant partie d'un système de gestion de réseau ou NMS (pour « Network Management System »). Dans l'exemple non limitatif illustré sur la figure 1, l'indice i des noeuds Ni varie entre 1 et 6 (N1 à N6), mais il peut prendre n'importe quelle valeur supérieure ou égale à deux.

Ces noeuds Ni sont par exemple des routeurs. Ils comprennent chacun une base de données d'ingénierie de trafic (ou TEDB pour « Traffic Engineering DataBase ») BD, dans laquelle sont stockées des données d'ingénierie de trafic, comme par exemple la topologie d'une partie au moins du réseau (de transport) RT, les états respectifs des connexions (ou liens) établi(e)s entre les noeuds Ni de cette partie de réseau RT, et les ressources déjà utilisées dans la partie de réseau RT. Chaque base BD est alimentée en données et mises à jour au moyen d'un protocole de routage, tel que OSPF-TE (Open Shortest Path First Protocol - Traffic Engineering).

Des terminaux de communication Ti (ici i = 1 à 3) sont connectés directement ou indirectement à certains noeuds Ni (ici N5 et N6). Dans l'exemple non limitatif illustré sur la figure 1, le terminal de communication T3 est schématiquement connecté au noeud N6, tandis que les terminaux de communication T1 et T2 appartiennent à un réseau (local) d'entreprise RE et sont couplés au noeud N5 par l'intermédiaire d'un routeur RL dudit réseau d'entreprise RE.

On entend ici par « terminal de communication » tout équipement de communication fixe ou mobile (ou portable ou encore cellulaire) capable d'échanger des données avec un autre équipement, notamment via le réseau de communication RT. Par conséquent, il pourra par exemple s'agir d'un téléphone fixe ou mobile (ou cellulaire), d'un ordinateur fixe ou portable, d'un assistant personnel numérique (ou PDA) communicant, ou d'un serveur de données.

On considère dans ce qui suit, à titre d'exemple illustratif et non limitatif, que les terminaux T1 et T2 du réseau d'entreprise RE sont des ordinateurs fixes, tandis que le terminal T3 est un serveur de données, par exemple de type multimédia.

Afin de permettre à ces terminaux (de communication) d'obtenir des informations représentatives au moins en partie des caractéristiques de session qu'un réseau de communication RT est en mesure de supporter, l'invention propose d'implanter dans ce réseau de communication RT au moins un dispositif de contrôle d'établissement de session D.

Ce dispositif D est destiné à gérer l'établissement de sessions d'échange (ou transfert) de données entre des terminaux Ti, via le réseau de communication RT, au niveau de la couche session.

Un dispositif D peut, comme cela est illustré sur la figure 1, faire partie d'un élément (ou équipement) de réseau comme par exemple un serveur proxy SP connecté à au moins un noeud Ni du réseau de communication RT (ici le routeur N5). Mais, dans une variante illustrée sur la figure 2, un dispositif D peut faire partie d'un serveur proxy SP directement intégré dans un noeud Ni du réseau de communication RT (ici le routeur N5). Il pourrait également faire partie d'un serveur applicatif du réseau.

Un dispositif D comprend au moins un module de traitement MT et un module de recherche MR couplés l'un à l'autre. On notera que ces deux modules (MT et MR) peuvent constituer deux sous-parties d'un module unique.

Le module de traitement MT est notamment chargé, chaque fois que son dispositif D reçoit une demande d'établissement d'une session entre un terminal demandeur, par exemple T1, et au moins un terminal de correspondant, par exemple T3, de localiser chaque terminal de correspondant de manière à permettre l'établissement de cette session.

On entend ici par « localiser un terminal de correspondant » le fait de déterminer son adresse de communication (par exemple son adresse Internet (IP)) d'après son adresse de session. Cette opération de localisation étant bien connue de l'homme de l'art, elle ne sera pas décrite ici.

La demande d'établissement de session est initialement transmise par le terminal demandeur T1 à destination du serveur proxy SP qui le représente lors de l'établissement des sessions, et le serveur proxy SP communique cette demande au dispositif D qu'il comprend (dans l'exemple décrit).

La communication entre les terminaux Ti et le réseau de communication RT se faisant au niveau de la couche session, les demandes d'établissement de session sont donc conformes à un protocole de session. On considère dans ce qui suit, à titre d'exemple illustratif et non limitatif, que le protocole de session est SIP (pour « Session Initiation Protocol » - protocole d'initiation de session). Dans ce cas, le terminal demandeur T1 génère chaque demande d'établissement de session sous la forme d'un message de type « INVITE ». Ce message comporte l'adresse de session du terminal demandeur (T1), l'adresse de session de chaque terminal de correspondant (ici T3) qui doit participer à la session requise par le terminal demandeur (T1), et les paramètres définissant cette session.

Mais l'invention n'est pas limitée au protocole de session SIP. Elle concerne d'autres protocoles de session, comme par exemple SDP, ou des combinaisons de protocoles de session, comme par exemple SIP/SDP.

Le module de recherche MR est chargé, chaque fois que le module de traitement MT associé a localisé chaque terminal de correspondant consécutivement à la réception d'une demande d'établissement d'une session entre un terminal demandeur, par exemple T1, et au moins un terminal de correspondant, par exemple T3, de déterminer des informations de session relatives à certaines au moins des caractéristiques de session que peut supporter le réseau à un instant donné pour chaque communication entre le terminal demandeur T1 et un terminal de correspondant T3.

On entend ici par « information de session » tout type d'information (ou de caractéristique) permettant de caractériser (ou définir) une session. Il pourra par exemple s'agir de données d'ingénierie de trafic ou d'informations issues de données d'ingénierie de trafic, et/ou d'informations relatives à la qualité de service (QoS), comme par exemple la jigue, la bande passante disponible, la bande passante pouvant être réservée, la latence, ou le taux d'erreur, et/ou d'informations issues des données de qualité de service. Par exemple, les informations de session peuvent désigner une classe de service (telle que « gold ») qui est elle-même définie par plusieurs caractéristiques, ou bien le quantité de débit (Mbits/s) qui est encore disponible sur une route (liaison) proposée par le réseau de communication RT.

Le mode de détermination des informations de session dépend du lieu d'implantation du serveur proxy SP qui contient un dispositif D.

Dans l'exemple illustré sur la figure 1, le serveur proxy SP est connecté à un routeur N5. Pour se procurer des informations de session, le module de recherche MR du dispositif D peut, par exemple, interroger à distance la base de données d'ingénierie de trafic BD du routeur N5. Pour ce faire, il génère des messages d'interrogation demandant au routeur de lui transmettre le contenu de sa base de données d'ingénierie de trafic BD, et conformes à un protocole de routage à extension d'ingénierie de trafic. En variante, le routeur peut diffuser régulièrement, par exemple périodiquement, le contenu de sa base de données d'ingénierie de trafic BD conformément au protocole de routage à extension d'ingénierie de trafic. On considère dans ce qui suit, à titre d'exemple illustratif et non limitatif, que le protocole de routage à extension d'ingénierie de trafic est le protocole OSPF-TE. L'obtention d'informations de session auprès d'une base de données d'ingénierie de trafic BD, au moyen de messages d'interrogation OSPF-TE, étant bien connue de l'homme de l'art, elle ne sera pas décrite ici.

Une fois que le module de recherche MR du dispositif D dispose du contenu de la base de données d'ingénierie de trafic BD, il peut alors déterminer dans ce contenu les informations de session qui l'intéressent.

Les informations de session, relatives à certaines au moins des caractéristiques de la session que peut supporter le réseau, sont destinées à permettre au terminal demandeur T1 et/ou à l'un au moins des terminaux de correspondant T3 de déterminer si elles sont suffisantes pour la session envisagée, afin de pouvoir décider de poursuivre l'établissement de cette session, et éventuellement de procéder à la réservation des ressources correspondantes. On comprend que si le réseau n'est pas en mesure, à un instant donné, de supporter la session demandée, il ne sert à rien d'établir effectivement cette session.

Les informations de session sont transmises par le routeur N5 au serveur proxy SP qui les a requises, au moyen de messages de réponse conformes au protocole de routage à extension d'ingénierie de trafic (ici OSPF-TE). Le serveur proxy SP les communique alors à son dispositif D.

Dans la variante illustrée sur la figure 2, le serveur proxy SP est intégré dans un routeur (N5). Le module de recherche MR du dispositif D peut alors, par exemple, interroger directement la base de données d'ingénierie de trafic BD du routeur N5 sans avoir besoin de recourir à un protocole de routage à extension d'ingénierie de trafic.

On notera que dans une variante du premier cas décrit ci-avant, le module de recherche MR du dispositif D peut déterminer les informations de session auprès du serveur de gestion SG du système de gestion de réseau (NMS) du réseau de communication RT, plutôt que dans une base de données BD d'un routeur N5 auquel il est connecté. Pour ce faire, il peut par exemple générer des messages d'interrogation conformes à un protocole tel que SNMP.

Une fois que le module de recherche MR a récupéré les informations de session, il peut les communiquer au module de traitement MT associé. Ce dernier intègre alors les informations de session dans au moins un message de contrôle de session destiné au terminal demandeur T1 et/ou à l'un au moins des terminaux de correspondant T3, afin que l'un au moins de ces terminaux T1 et T3 puisse décider d'établir effectivement la session compte tenu des informations reçues, comme indiqué ci-avant.

On va maintenant détailler les trois situations qui correspondent respectivement à l'envoi de message(s) de session comportant les informations de session au seul terminal demandeur T1, à l'un au moins des terminaux de correspondant T3, et au terminal demandeur T1 ainsi qu'à l'un au moins des terminaux de correspondant T3. On considère dans ce qui suit, à titre d'exemple illustratif et non limitatif, que le serveur proxy SP est de type SIP et connecté au routeur R5.

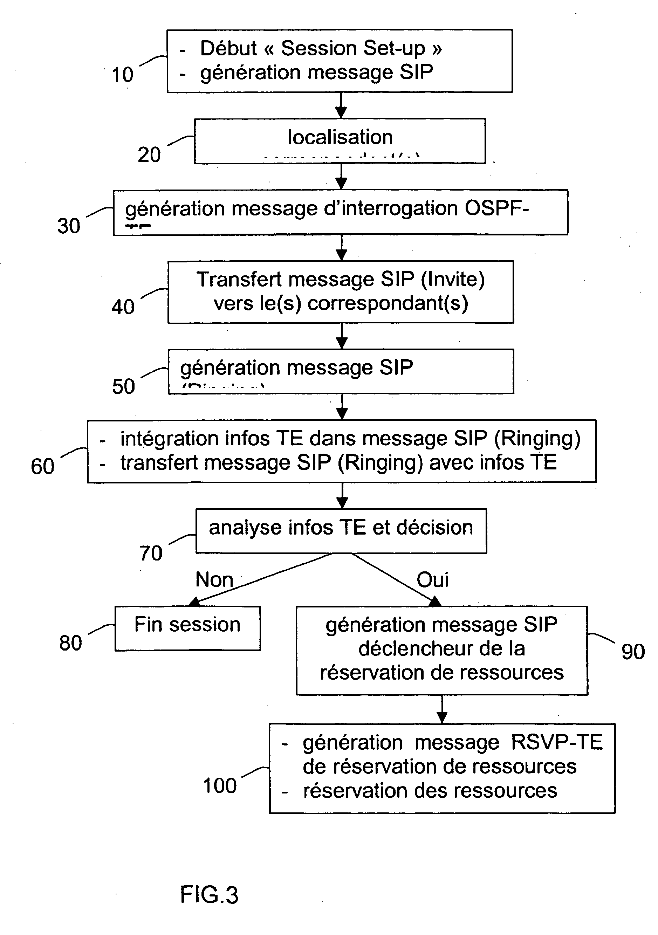

La première situation, correspondant à l'envoi d'un message de contrôle de session comportant les informations de session au seul terminal demandeur T1, est illustrée sur la figure 3.

Dans une étape 10, le terminal demandeur T1, qui souhaite établir une session, initie classiquement une phase appelée ici « Session Set-up ». Il génère un message SIP de demande d'établissement de session, de type « INVITE », comportant son adresse de session, l'adresse de session de chaque terminal de correspondant (par exemple T3) avec lequel il veut partager la session, et les paramètres définissant cette session.

Ce message SIP parvient au routeur RL du réseau d'entreprise RE, qui le transmet au serveur proxy SP qui est chargé de représenter le terminal demandeur T1. Le serveur proxy SP transmet alors ce message SIP au dispositif D qu'il comprend.

Dans une étape 20, le module de traitement MT du dispositif D localise le terminal de correspondant T3. Puis, le module de traitement MT transmet l'identifiant de communication du terminal de correspondant T3 au module de recherche MR de son dispositif D.

Dans une étape 30, le module de recherche MR génère par exemple un message d'interrogation, conforme à un protocole de routage à extension d'ingénierie de trafic, par exemple OSPF-TE, et ordonne au serveur proxy SP de le transmettre au routeur R5. Ce message d'interrogation est destiné à récupérer le contenu de la base de données BD du routeur R5, de manière à déterminer dans ce contenu des informations de session qui représentent une partie au moins des caractéristiques de la session que peut supporter le réseau à un instant donné.

Dans une étape 40, qui peut précéder, suivre ou être contemporaine de l'étape 30, le module de traitement MT ordonne au serveur proxy SP de transférer le message SIP (INVITE) reçu vers le terminal de correspondant T3 qu'il a localisé.

Dans une étape 50, le terminal de correspondant T3, génère un message de contrôle de session SIP, par exemple de type « Ringing » s'il accepte l'établissement de la session, puis il transmet ce message SIP (Ringing) au serveur proxy SP.

Pendant ce temps, le routeur R5 a transmis au serveur proxy SP, dans un message de réponse OSPF-TE, les informations de session (TE) requises.

Dans une étape 60, le module de traitement MT intègre dans le message SIP (Ringing), transmis par le terminal de correspondant T3, les informations de session qui lui ont été communiquées par le module de recherche MR. Puis, le module de traitement MT ordonne au serveur proxy SP de transférer le message SIP (Ringing), contenant les informations de session, vers le terminal demandeur T1. Le message circule alors du réseau de communication RT jusqu'au routeur local RL du réseau d'entreprise RE, qui le transmet alors au terminal demandeur T1.

Dans une étape 70, le terminal demandeur T1 analyse les informations de session contenues dans le message SIP (Ringing) reçu. Si il estime que les informations de session, qui caractérisent la session que peut supporter le réseau de communication RT, ne peuvent pas permettre de transférer vers le terminal de correspondant T3 le trafic prévu pour cette session, alors il interrompt la phase d'établissement de session dans une étape 80. Dans le cas contraire, le terminal demandeur T1 peut par exemple générer dans une étape 90, à destination du serveur proxy SP, un message demandant la poursuite de la session. A réception de ce message le serveur proxy SP sait alors qu'il doit procéder à la réservation auprès du réseau de communication RT des ressources correspondant à la définition initiale de la session.

Dans une étape 100, le serveur proxy SP génère un message de réservation de ressources conforme à un protocole de réservation de ressources à extension de trafic d'ingénierie, comme par exemple RSVP-TE, à destination du routeur R5, afin qu'il effectue la réservation des ressources définies dans le message RSVP-TE reçu, selon la technique classique bien connue de l'homme de l'art.

Dans une variante, le terminal demandeur T1 peut par exemple générer lui-même un message de réservation de ressources.

Il est important de noter que les étapes 90 et 100 ne sont envisageables que dans le cas d'un réseau de communication mettant en oeuvre un mécanisme de réservation de ressources (ce qui n'est par exemple pas le cas d'un simple réseau IP). Lorsque le réseau de communication ne permet pas la réservation de ressources, le terminal T1 ne peut alors que décider de poursuivre ou d'interrompre l'établissement de la session.

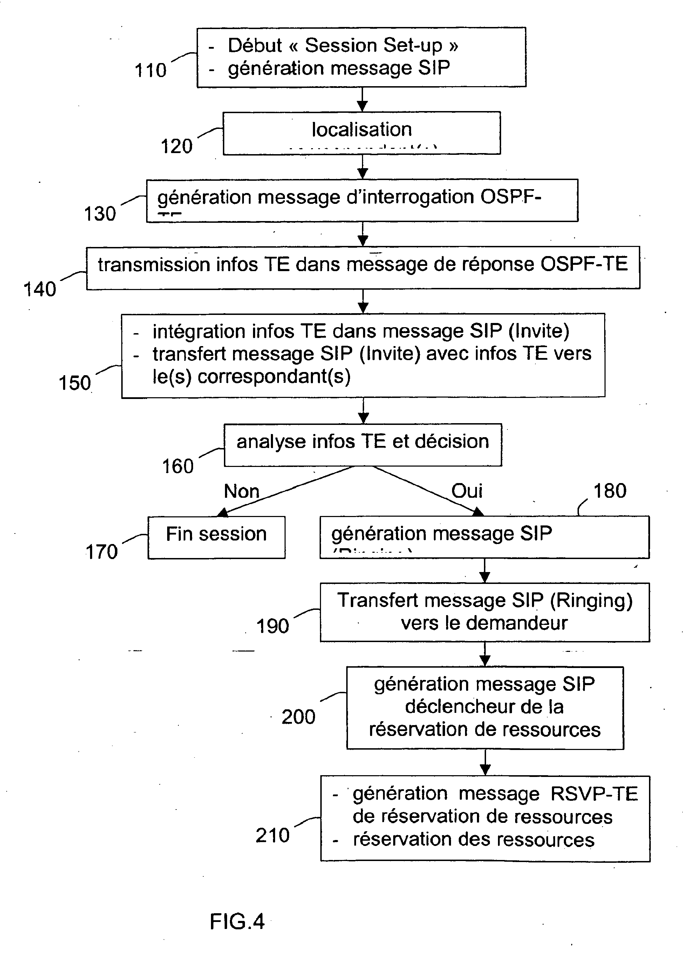

La deuxième situation, correspondant à l'envoi d'un message de contrôle de session comportant les informations de session au seul terminal de correspondant T3, est illustrée sur la figure 4.

Dans une étape 110, le terminal demandeur T1, qui souhaite établir une session, initie classiquement une phase appelée ici « Session Set-up ». Il génère un message SIP de demande d'établissement de session, de type « INVITE », comportant son adresse de session, l'adresse de session de chaque terminal de correspondant (par exemple T3) avec lequel il veut partager la session, et les paramètres définissant cette session.

Ce message SIP parvient au routeur RL du réseau d'entreprise RE, qui le transmet au serveur proxy SP qui est chargé de représenter le terminal demandeur T1. Le serveur proxy SP transmet alors ce message SIP au dispositif D qu'il comprend.

Dans une étape 120, le module de traitement MT du dispositif D localise le terminal de correspondant T3. Puis, le module de traitement MT transmet l'identifiant de communication du terminal de correspondant T3 au module de recherche MR de son dispositif D.

Dans une étape 130, le module de recherche MR génère par exemple un message d'interrogation, conforme à un protocole de routage à extension d'ingénierie de trafic, par exemple OSPF-TE, et ordonne au serveur proxy SP de le transmettre au routeur R5. Ce message d'interrogation est destiné à récupérer le contenu de la base de données BD du routeur R5, de manière à déterminer dans ce contenu des informations de session qui représentent une partie au moins des caractéristiques de la session que peut supporter le réseau à un instant donné.

Dans une étape 140, le routeur R5 transmet au serveur proxy SP, dans un message de réponse OSPF-TE, le contenu de sa base de données BD. Le module de recherche MR peut alors déterminer dans ce contenu les informations de session qui caractérisent au moins en partie la session que peut supporter le réseau à un instant donné.

Dans une étape 150, le module de traitement MT intègre dans le message SIP (INVITE) reçu les informations de session qui lui ont été communiquées par le module de recherche MR. Puis, le module de traitement MT ordonne au serveur proxy SP de transférer ce message SIP (INVITE), contenant les informations de session, vers le terminal de correspondant T3 qu'il a localisé.

Dans une étape 160, le terminal de correspondant T3 analyse les informations de session contenues dans le message SIP (INVITE) reçu. Si il estime que les informations de session, qui caractérisent au moins en partie la session que peut supporter le réseau de communication RT, ne peuvent pas permettre de transférer vers le terminal demandeur T1 le trafic prévu pour cette session, alors il interrompt la phase d'établissement de session dans une étape 170. Dans le cas contraire, le terminal de correspondant T3 génère dans une étape 180 un message de contrôle de session SIP, par exemple de type « Ringing », puis il transmet ce message SIP (Ringing) au serveur proxy SP.

Dans une étape 190, le serveur proxy SP transfère le message SIP (Ringing) reçu vers le terminal demandeur T1. Le message circule alors du réseau de communication RT jusqu'au routeur local RL du réseau d'entreprise RE, qui le transmet alors au terminal demandeur T1.

Dans une étape 200, le terminal de correspondant T3 peut ensuite éventuellement générer, à destination du serveur proxy SP, un message demandant la poursuite de la session. A réception de ce message le serveur proxy SP sait alors qu'il doit procéder à la réservation auprès du réseau de communication RT des ressources correspondant à la définition initiale de la session.

Dans ce cas, dans une étape 210, le serveur proxy SP génère un message de réservation de ressources conforme à un protocole de réservation de ressources à extension de trafic d'ingénierie, comme par exemple RSVP-TE, à destination du routeur R5, afin qu'il effectue la réservation des ressources définies dans le message RSVP-TE reçu, selon la technique classique bien connue de l'homme de l'art.

Dans une variante, le terminal demandeur T1 peut par exemple générer lui-même un message de réservation de ressources.

Il est important de noter que les étapes 200 et 210 ne sont envisageables que dans le cas d'un réseau de communication mettant en oeuvre un mécanisme de réservation de ressources (ce qui n'est par exemple pas le cas d'un simple réseau IP). Lorsque le réseau de communication ne permet pas la réservation de ressources, le terminal T3 ne peut alors que décider de poursuivre ou d'interrompre l'établissement de la session.

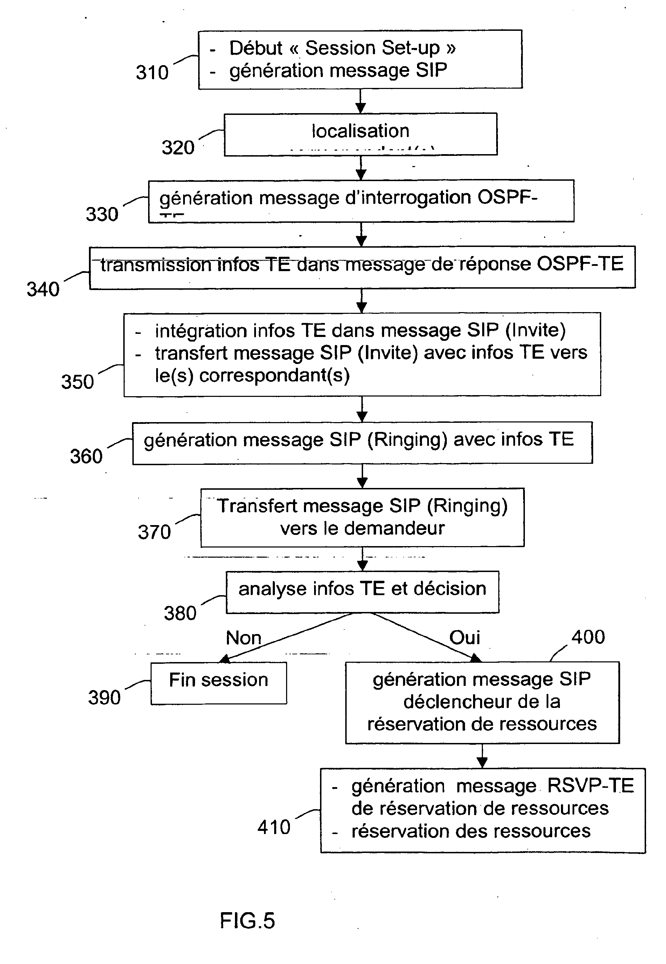

La troisième situation, correspondant à l'envoi de messages de contrôle de session comportant les informations de session respectivement au terminal demandeur T1 et au terminal de correspondant T3, est illustrée sur la figure 5.

Les étapes 310 à 350 sont identiques aux étapes 110 à 150 décrites ci-avant. Les modifications par rapport à la deuxième situation commencent à l'étape 360.

Dans l'étape 360, le terminal de correspondant T3, génère un message de contrôle de session SIP, par exemple de type « Ringing » s'il accepte l'établissement de la session, en intégrant dedans les informations de session (TE) contenues dans le message SIP (INVITE) reçu. Puis, il transmet ce message SIP (Ringing) au serveur proxy SP.

Dans une étape 370, le serveur proxy SP transfère le message SIP (Ringing) reçu vers le terminal demandeur T1. Le message circule alors du réseau de communication RT jusqu'au routeur local RL du réseau d'entreprise RE, qui le transmet alors au terminal demandeur T1.

Le terminal demandeur T1 et le terminal de correspondant T3 disposant tous les deux des informations de session (TE) caractérisant au moins en partie la session que peut supporter le réseau RT, ils sont donc l'un comme l'autre capables de les analyser afin de décider si elles permettent le transfert du trafic prévu pour cette session.

On considère ci-après que c'est le terminal demandeur T1 qui analyse les informations de session et qui prend la décision de poursuivre ou non la session, dans une étape 380. Mais, il pourrait s'agir du terminal de correspondant T3.

Si le terminal demandeur T1 estime que les informations de session, qui caractérisent au moins en partie la session que peut supporter le réseau de communication RT, ne peuvent pas permettre de transférer vers le terminal de correspondant T3 le trafic prévu pour cette session, alors il interrompt la phase d'établissement de session dans une étape 390. Dans le cas contraire, le terminal demandeur T1 peut ensuite éventuellement générer dans une étape 400, à destination du serveur proxy SP, un message demandant la poursuite de la session. A réception de ce message le serveur proxy SP sait alors qu'il doit procéder à la réservation auprès du réseau de communication RT des ressources correspondant à la définition initiale de la session.

Dans ce cas, dans une étape 410, le serveur proxy SP génère un message de réservation de ressources conforme à un protocole de réservation de ressources à extension de trafic d'ingénierie, comme par exemple RSVP-TE, à destination du routeur R5, afin qu'il effectue la réservation des ressources définies dans le message RSVP-TE reçu, selon la technique classique bien connue de l'homme de l'art.

Dans une variante, le terminal demandeur T1 peut par exemple générer lui-même un message de réservation de ressources.

Il est important de noter que les étapes 400 et 410 ne sont envisageables que dans le cas d'un réseau de communication mettant en oeuvre un mécanisme de réservation de ressources (ce qui n'est par exemple pas le cas d'un simple réseau IP). Lorsque le réseau de communication ne permet pas la réservation de ressources, le terminal T1 et/ou le terminal T3 ne peu(ven)t alors que décider de poursuivre ou d'interrompre l'établissement de la session.

Le dispositif de contrôle D selon l'invention, et notamment son module de traitement MT et son module de recherche MR, peuvent être réalisés sous la forme de circuits électroniques, de modules logiciels (ou informatiques), ou d'une combinaison de circuits et de logiciels.

L'invention ne se limite pas aux modes de réalisation de dispositif de contrôle et de routeur décrits ci-avant, seulement à titre d'exemple, mais elle englobe toutes les variantes que pourra envisager l'homme de l'art dans le cadre des revendications ci-après.

Ainsi, dans ce qui précède on a décrit un réseau de communication ne comprenant qu'un seul dispositif de contrôle d'établissement de session. Mais, chaque noeud du réseau de communication peut comporter ou être connecté à un serveur proxy comprenant un dispositif de contrôle d'établissement de sessions. En variante, on peut prévoir plusieurs serveurs proxy comprenant un dispositif de contrôle d'établissement de sessions et connectés chacun à plusieurs noeuds du réseau de communication.

## Revendications

1. Dispositif de contrôle (D), au niveau de la couche session, de l'établissement de sessions de communication de données entre des terminaux de communication (T1,T3), via un réseau de communication (RT), et comprenant des moyens de traitement (MT) agencés, en cas de réception d'une demande d'établissement d'une session entre un terminal demandeur (T1) et au moins un terminal de correspondant (T3), pour localiser chaque terminal de correspondant (T3) de manière à permettre l'établissement de cette session, **caractérisé en ce qu'**il comprend des moyens de recherche (MR) agencés, lorsque lesdits moyens de traitement (MT) ont reçu ladite demande d'établissement d'une session entre un terminal demandeur (T1) et au moins un terminal de correspondant (T3) et qu'ils ont localisé ledit au moins un terminal de correspondant, pour déterminer des informations de session représentatives de caractéristiques de session que peut supporter le réseau de communication pour chaque communication entre ledit terminal demandeur (T1) et ledit au moins un terminal de correspondant (T3) et choisies dans un groupe comprenant des données d'ingénierie de trafic, des informations issues de données d'ingénierie de trafic, des informations relatives à la qualité de service, et des informations issues desdites informations relatives à la qualité de service, et **en ce que** lesdits moyens de traitement (MT) sont agencés pour intégrer dans au moins un message de contrôle de session destiné audit terminal demandeur (T1) et/ou à l'un au moins desdits terminaux de correspondant (T3) lesdites informations de session déterminées par lesdits moyens de recherche (MR), de sorte que l'un au moins de ces terminaux (T1,T3) puisse décider d'établir effectivement ladite session compte tenu desdites informations de session reçues.

2. Dispositif selon la revendication 1, **caractérisé en ce que** lesdits moyens de traitement (MT) sont agencés pour intégrer les informations de session dans un message de contrôle de session destiné audit terminal demandeur (T1), de sorte que ce dernier puisse décider d'établir effectivement ladite session compte tenu desdites informations de session reçues.

3. Dispositif selon la revendication 2, **caractérisé en ce que** lesdits moyens de traitement (MT) sont agencés, à réception de ladite demande d'établissement d'une session entre un terminal demandeur (T1) et au moins un terminal de correspondant (T3), pour ordonner le transfert de ladite demande vers chaque terminal de correspondant (T3) localisé, et, à réception de messages de contrôle de session signalant un accord d'établissement provenant de chaque terminal de correspondant (T3), pour intégrer dans l'un au moins desdits messages de contrôle de session reçus lesdites informations de session avant d'ordonner le transfert desdits messages de contrôle de session vers ledit terminal demandeur (T1).

4. Dispositif selon la revendication 1, **caractérisé en ce que** lesdits moyens de traitement (MT) sont agencés pour intégrer les informations de session dans des messages de contrôle de session destinés à chaque terminal de correspondant (T3), de sorte que l'un au moins desdits terminaux de correspondant (T3) puisse décider d'établir effectivement ladite session compte tenu desdites informations de session reçues.

5. Dispositif selon la revendication 4, **caractérisé en ce que** lesdits moyens de traitement (MT) sont agencés, à réception de ladite demande d'établissement d'une session entre un terminal demandeur (T1) et au moins un terminal de correspondant (T3), pour intégrer dans ladite demande lesdites informations de session avant d'ordonner son transfert vers chaque terminal de correspondant (T3) localisé, et, à réception de messages de contrôle de session signalant un accord d'établissement provenant de chaque terminal de correspondant (T3), pour ordonner le transfert desdits messages de contrôle de session reçus vers ledit terminal demandeur (T1).

6. Dispositif selon la revendication 1 **caractérisé en ce que** lesdits moyens de traitement (MT) sont agencés pour intégrer les informations de session dans des messages de contrôle de session destinés respectivement audit terminal demandeur (T1) et à chaque terminal de correspondant (T3), de sorte que l'un au moins de ces terminaux (T1, T3) puisse décider d'établir effectivement ladite session compte tenu desdites informations de session reçues.

7. Dispositif selon la revendication 6, **caractérisé en ce que** lesdits moyens de traitement (MT) sont agencés, à réception de ladite demande d'établissement d'une session entre un terminai demandeur (T1) et au moins un terminal de correspondant (T3), pour intégrer dans ladite demande lesdites informations de session avant d'ordonner son transfert vers chaque terminal de correspondant (T3) localisé, et, à réception de messages de contrôle de session signalant un accord d'établissement et comprenant lesdites informations de session, en provenance de chaque terminal de correspondant (T3), pour ordonner le transfert desdits messages de contrôle de session reçus vers ledit terminal demandeur (T1).

8. Dispositif selon l'une des revendications 1 à 7, **caractérisé en ce que** lesdits moyens de recherche (MR) sont agencés pour déterminer lesdites informations de session à partir de données déterminées auprès d'éléments dudit réseau (Ni) disposant d'une base de données d'ingénierie de trafic (BD), au moyen de messages conformes à un protocole de routage à extension d'ingénierie de trafic choisi.

9. Dispositif selon la revendication 8, **caractérisé en ce que** ledit protocole de routage à extension d'ingénierie de trafic est le protocole appelé OSPF-TE, Open Shortest Path First-Traffic Engineering.

10. Dispositif selon l'une des revendications 1 à 7, **caractérisé en ce que** lesdits moyens de recherche (MR) sont agencés pour déterminer lesdites informations de session auprès d'un système de gestion de réseau (SG) dudit réseau (RT).

11. Dispositif selon l'une des revendications 1 à 10, **caractérisé en ce que** lesdits messages de contrôle de session sont conformes à un protocole de session appelé SIP, Session Initiation Protocol, et/ou à un protocole de session appelé SDP, Session Description Protocol.

12. Élément de réseau (N5) comportant un dispositif selon l'une des revendications 1 à 7 et une base de données d'ingénierie de trafic, lesdits moyens de recherche (MR) sont agencés pour déterminer lesdites informations de session dans ladite base de données d'ingénierie de trafic (BD) dudit élément de réseau (N5)

13. Serveur de type proxy (SP) pour un réseau de communication (RT), **caractérisé en ce qu'**il comprend un dispositif de contrôle (D) selon l'une des revendications 1 à 11.

14. Routeur (N5) pour un réseau de communication (RT), **caractérisé en ce qu'**il comprend un serveur de type proxy (SP) selon la revendication 13.

## Patentansprüche

1. Vorrichtung (D), auf Höhe der Sitzungsschicht, zur Kontrolle des Aufbaus von Sitzungen zur Datenkommunikation zwischen Kommunikationsendgeräten (T1, T3) über ein Kommunikationsnetz (RT), und umfassend Verarbeitungsmittel (MT), die angeordnet sind, um im Fall eines Empfangs einer Anforderung für den Aufbau einer Sitzung zwischen einem anfragenden Endgerät (T1) und mindestens einem Teilnehmerendgerät (T3) jedes Teilnehmerendgerät (T3) zu lokalisieren, so dass der Aufbau dieser Sitzung ermöglicht wird, **dadurch gekennzeichnet, dass** sie Suchmittel (MR) umfasst, die angeordnet sind, um, wenn die besagten Verarbeitungsmittel (MT) die besagte Anforderung für den Aufbau einer Sitzung zwischen einem anfragenden Endgerät (T1) und mindestens einem Teilnehmerendgerät (T3) empfangen haben und sie das besagte mindestens eine Teilnehmerendgerät lokalisiert haben, Sitzungsinformationen zu ermitteln, die für die Sitzungseigenschaften bezeichnend sind, die das Kommunikationsnetz für jede Kommunikation zwischen dem besagten anfragenden Endgerät (T1) und dem besagten mindestens einen Teilnehmerendgerät (T3) unterstützen kann, und die in einer Gruppe ausgewählt werden, umfassend verkehrstechnische Daten, Informationen, die aus verkehrstechnischen Daten stammen, Informationen bezüglich der Servicequalität und Informationen, die aus den besagten Informationen bezüglich der Servicequalität stammen, und dadurch, dass die besagten Verarbeitungsmittel (MT) angeordnet sind, um in mindestens eine Sitzungskontrollnachricht, die für das besagte anfragende Endgerät (T1) und/oder für mindestens eines der besagten Teilnehmerendgeräte (T3) bestimmt ist, die besagten Sitzungsinformationen zu integrieren, die von den besagten Suchmitteln (MR) ermittelt werden, so dass mindestens eines dieser Endgeräte (T1, T3) beschließen kann, die besagte Sitzung unter Berücksichtigung der besagten empfangenen Sitzungsinformationen tatsächlich aufzubauen.

2. Vorrichtung nach Anspruch 1, **dadurch gekennzeichnet, dass** die besagten Verarbeitungsmittel (MT) angeordnet sind, um die Sitzungsinformationen in eine Sitzungskontrollnachricht zu integrieren, die für das besagte anfragende Endgerät (T1) bestimmt ist, so dass Letzteres beschließen kann, die besagte Sitzung unter Berücksichtigung der besagten empfangenen Sitzungsinformationen tatsächlich aufzubauen.

3. Vorrichtung nach Anspruch 2, **dadurch gekennzeichnet, dass** die besagten Verarbeitungsmittel (MT) angeordnet sind, um, bei Empfang der besagten Anforderung für den Aufbau einer Sitzung zwischen einem anfragenden Endgerät (T1) und mindestens einem Teilnehmerendgerät (T3), die Übertragung der besagten Anforderung an jedes lokalisierte Teilnehmerendgerät (T3) zu befehlen, und um, bei Empfang von Sitzungskontrollnachrichten, eine Zustimmung zum Aufbau von jedem Teilnehmerendgerät (T3) melden, in mindestens eine der besagten empfangenen Sitzungskontrollnachrichten die besagten Sitzungsinformationen zu integrieren, bevor die Übertragung der besagten Sitzungskontrollnachrichten an das besagte anfragende Endgerät (T1) befohlen wird.

4. Vorrichtung nach Anspruch 1, **dadurch gekennzeichnet, dass** die besagten Verarbeitungsmittel (MT) angeordnet sind, um die Sitzungsinformationen in Sitzungskontrollnachrichten zu integrieren, die für jedes Teilnehmerendgerät (T3) bestimmt sind, so dass mindestens eines der besagten Teilnehmerendgeräte (T3) beschließen kann, die besagte Sitzung unter Berücksichtigung der besagten empfangenen Sitzungsinformationen tatsächlich aufzubauen.

5. Vorrichtung nach Anspruch 4, **dadurch gekennzeichnet, dass** die besagten Verarbeitungsmittel (MT) angeordnet sind, um, bei Empfang der besagten Anforderung für den Aufbau einer Sitzung zwischen einem anfragenden Endgerät (T1) und mindestens einem Teilnehmerendgerät (T3), in die besagte Anforderung die besagten Sitzungsinformationen zu integrieren, bevor ihre Übertragung an jedes lokalisierte Teilnehmerendgerät (T3) befohlen wird, und um, bei Empfang von Sitzungskontrollnachrichten, die eine Zustimmung zum Aufbau von jedem Teilnehmerendgerät (T3) melden, die Übertragung der besagten empfangenen Sitzungskontrollnachrichten an das besagte anfragende Endgerät (T1) zu befehlen.

6. Vorrichtung nach Anspruch 1, **dadurch gekennzeichnet, dass** die besagten Verarbeitungsmittel (MT) angeordnet sind, um die Sitzungsinformationen in Sitzungskontrollnachrichten zu integrieren, die jeweils für das besagte anfragende Endgerät (T1) und jedes Teilnehmerendgerät (T3) bestimmt sind, so dass mindestens eines dieser Endgeräte (T1, T3) beschließen kann, die besagte Sitzung unter Berücksichtigung der besagten empfangenen Sitzungsinformationen tatsächlich aufzubauen.

7. Vorrichtung nach Anspruch 6, **dadurch gekennzeichnet, dass** die besagten Verarbeitungsmittel (MT) angeordnet sind, um, bei Empfang der besagten Anforderung für den Aufbau einer Sitzung zwischen einem anfragenden Endgerät (T1) und mindestens einem Teilnehmerendgerät (T3), in die besagte Anforderung die besagten Sitzungsinformationen zu integrieren, bevor ihre Übertragung an jedes lokalisierte Teilnehmerendgerät (T3) befohlen wird, und um, bei Empfang von ausgehend von jedem Teilnehmerendgerät (T3) stammende Sitzungskontrollnachrichten, die eine Zustimmung zum Aufbau melden und die besagten Sitzungsinformationen umfassen, die Übertragung der besagten empfangenen Sitzungskontrollnachrichten an das besagte anfragende Endgerät (T1) zu befehlen.

8. Vorrichtung nach einem beliebigen der Ansprüche 1 bis 7, **dadurch gekennzeichnet, dass** die besagten Suchmittel (MR) angeordnet sind, um die besagten Sitzungsinformationen ausgehend von Daten zu ermitteln, die bei Elementen des besagten Netzes (Ni) ermittelt werden, das über eine Datenbank für verkehrstechnische Daten (BD) verfügt, mittels Nachrichten, die einem ausgewählten Routing-Protokoll mit verkehrstechnischer Erweiterung entsprechen.

9. Vorrichtung nach Anspruch 8, **dadurch gekennzeichnet, dass** das besagte Routing-Protokoll mit verkehrstechnischer Erweiterung das Protokoll ist, das sich OSPF-TE, Open Shortest Path First - Traffic Engineering, nennt.

10. Vorrichtung nach einem beliebigen der Ansprüche 1 bis 7, **dadurch gekennzeichnet, dass** die besagten Suchmittel (MR) angeordnet sind, um die besagten Sitzungsinformationen bei einem Netzverwaltungssystem (SG) des besagten Netzes (RT) zu ermitteln.

11. Vorrichtung nach einem beliebigen der Ansprüche 1 bis 10, **dadurch gekennzeichnet, dass** die besagten Sitzungskontrollnachrichten einem Sitzungsprotokoll, das sich SIP, Session Initiation Protocol, nennt, und/oder einem Sitzungsprotokoll, das sich SDP, Session Description Protocol, nennt, entsprechen.

12. Netzelement (N5), umfassend eine Vorrichtung nach einem beliebigen der Ansprüche 1 bis 7 und eine Datenbank für verkehrstechnische Daten, wobei die besagten Suchmittel (MR) angeordnet sind, um die besagten Sitzungsinformationen in der besagten Datenbank für verkehrstechnische Daten (BD) des besagten Netzelements (N5) zu ermitteln.

13. Server vom Typ Proxy (SP) für ein Kommunikationsnetz (RT), **dadurch gekennzeichnet, dass** er eine Vorrichtung (D) zur Kontrolle nach einem beliebigen der Ansprüche 1 bis 11 umfasst.

14. Router (N5) für ein Kommunikationsnetz (RT), **dadurch gekennzeichnet, dass** er einen Server vom Typ Proxy (SP) nach Anspruch 13 umfasst.

## Claims

1. A control device (D), within the session layer, for establishing data communication sessions between communication terminals (T1, T3) via a communication network (RT), and comprising means of processing (MT) arranged, in the event a request is received to establish a session between a requesting terminal (T1) and at least one contact terminal (T3), to locate each contact terminal (T3) so as to allow the establishment of that session, **characterized in that** it comprises means of search (MR) arranged, when said means of processing (MT) have received said request to establish a session between a requesting terminal (T1) and at least one contact terminal (T3) and have located said at least one contact terminal, to determine session information representative of session characteristics that the communication network can support for each communication between said requesting terminal (T1) and said at least one contact terminal (T3) and chosen from a group comprising traffic engineering data, information taken from traffic engineering data, information relating to quality of service, and **in that** said means of processing (MT) are arranged to integrate into at least one session control message intended for said requesting terminal (T1) and/or for at least one of said contact terminals (T3) said session information determined by said means of search (MR), so that at least one of those terminals (T1, T3) can decide to effectively establish said session given said received session information.

2. A device according to claim 1, **characterized in that** said means of processing (MT) are arranged to integrate session information into a session control message intended for said requesting terminal (T1), so that said terminal can decide to effectively establish said session given said received session information.

3. A device according to claim 2, **characterized in that** said means of processing (MT) are arranged, upon receiving said request to establish a session between a requesting terminal (T1) and at least one contact terminal (T3), to order the transfer of said request to each located contact terminal (T3), and upon receiving session control messages indicating an establishment agreement from each contact terminal (T3), to integrate said session information into at least one of said received session control messages before ordering the transfer of said session control messages to said requesting terminal (T1).

4. A device according to claim 1, **characterized in that** said means of processing (MT) are arranged to integrate session information into session control messages intended for each contact terminal (T3), so that at least one of said contact terminals (T3) can decide to effectively establish said session given said received session information.

5. A device according to claim 4, **characterized in that** said means of processing (MT) are arranged, upon receiving said request to establish a session between a requesting terminal (T1) and at least one contact terminal (T3), to integrate session information into said request before ordering its transfer to each located contact terminal (T3), and, upon receiving session control messages indicating an establishment agreement from each contact terminal (T3), to order the transfer of said received session control messages to said requesting terminal (T1).

6. A device according to claim 1, **characterized in that** said means of processing (MT) are arranged to integrate session information into session control messages intended for said requesting terminal (T1) and for each contact terminal (T3), respectively, so that at least one of those terminals (T1, T3) can decide to effectively establish said session given said received session information.

7. A device according to claim 6, **characterized in that** said means of processing (MT) are arranged, upon receiving said request to establish a session between a requesting terminal (T1) and at least one contact terminal (T3), to integrate said session information into said request before ordering its transfer to each located contact terminal (T3), and upon receiving session control messages indicating an establishment agreement and comprising said session information, coming from each contact terminal (T3), to order the transfer of said received session control messages to said requesting terminal (T1).

8. A device according to one of the claims 1 to 7, **characterized in that** said means of search (MR) are arranged to determine said session information from data determined from other elements of said network (Ni) having a traffic engineering database (BD), by means of messages that comply with a chosen routing protocol with a traffic engineering extension.

9. A device according to claim 8, **characterized in that** said routing protocol comply with a traffic engineering extension is the protocol called OSPF-RE, Open Shortest Path First - Traffic Engineering.

10. A device according to one of the claims 1 to 7, **characterized in that** said means of search (MR) are arranged to determine said session information from a network management system (SG) of said network (RT).

11. A device according to one of the claims 1 to 10, **characterized in that** said session control messages comply with a session protocol called SIP, Session Initiation Protocol, and/or with a session protocol called SDP, Session Description Protocol.

12. A network element (N5) comprising a device according to one of the claims 1 to 7 and a traffic engineering database, wherein said means of search (MR) are arranged to determine said session information in said traffic engineering database (BD) of said network element (N5).

13. A proxy server (SP) for a communication network (RT), **characterized in that** it comprises a control device (D) according to one of the claims 1 to 11.

14. A router (N5) for a communication network (RT), **characterized in that** it comprises a proxy server (SP) according to claim 13.
